(19) Europäisches Patentamt
European Patent Office
Office européen des brevets

(11) **EP 2 478 458 B1**

(12) **FASCICULE DE BREVET EUROPEEN**

(45) Date de publication et mention
de la délivrance du brevet:
**16.07.2014 Bulletin 2014/29**

(21) Numéro de dépôt: **10750102.5**

(22) Date de dépôt: **31.08.2010**

(51) Int Cl.:
***G06F 21/87*** *(2013.01)*

(86) Numéro de dépôt international:
**PCT/EP2010/062705**

(87) Numéro de publication internationale:
**WO 2011/032829 (24.03.2011 Gazette 2011/12)**

(54) **SYSTEME ANTI-INTRUSION POUR LA PROTECTION DE COMPOSANTS ELECTRONIQUES**

ELEKTRONISCHES DIEBSTAHLSICHERUNGSSYSTEM FÜR FAHRZEUGKOMPONENTEN

ANTI-INTRUSION SYSTEM FOR PROTECTING ELECTRONIC COMPONENTS

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **18.09.2009 FR 0904477**

(43) Date de publication de la demande:
**25.07.2012 Bulletin 2012/30**

(73) Titulaire: **Thales**
**92200 Neuilly Sur Seine (FR)**

(72) Inventeurs:
• **ZIAEI, Afshin**
**F-92170 Vanves (FR)**

• **MINOUX, Eric**
**F-75016 Paris (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-B1- 6 396 400**

**Description**

L'invention concerne un système anti-intrusion pour la protection de composants électroniques.

L'analyse technologique et/ou industrielle est définie comme la caractérisation approfondie d'un équipement (par exemple une carte électronique ou un composant) au niveau matériel ou logiciel. Plusieurs motivations peuvent être à l'origine de ce type d'études :

- L'évaluation de la technologie en termes de maturité, de fiabilité, etc. ;
- La recherche de défauts technologiques (suite à un disfonctionnement ou une panne par exemple) ;
- La recherche de l'utilisation d'une technologie brevetée (par exemple analyse d'un matériel concurrent dans le but de vérifier s'il n'utilise pas un brevet sans les droits d'exploitation) ;
- La copie du matériel (analyser la technologie d'un matériel pour être capable d'en reproduire le fonctionnement à l'identique) ;
- L'amélioration des performances du matériel. On peut avoir par exemple plusieurs versions d'un même matériel issues de la même ligne de fabrication, certaines exploitant toutes les ressources de la technologie et d'autres étant bridées en dessous de leurs capacités. Il peut s'agir par exemple d'un matériel militaire dont la version export est volontairement bridée pour ne pas avoir les mêmes performances que la version dédiée au marché national. Un pays étranger peut donc vouloir essayer de débrider son matériel pour le rendre plus performant ;
- La récupération des données sensibles dans un composant.

Cette liste n'est pas exhaustive mais on peut la séparer en deux classes d'études : les études faites sur son propre matériel pour en améliorer les caractéristiques et les études réalisées sur un matériel concurrent dans un but frauduleux.

La présente invention adresse préférentiellement la protection contre cette deuxième catégorie d'études que l'on peut qualifier d'attaques contre un matériel. Dans un premier temps, le but de ces attaques est souvent d'établir un schéma synoptique du matériel étudié. Dans le cas d'une carte électronique par exemple, on cherche à établir la nomenclature de la carte, dresser le schéma complet des pistes, vider le contenu des mémoires pour au final émuler et comprendre son fonctionnement.

Il existe plusieurs façons de protéger un matériel contre ce type d'agressions. Au niveau matériel, on peut par exemple enrober certaines parties d'une carte électronique dans une résine de protection qui empêche la visualisation et rend difficile l'accès à certains composants critiques. Au niveau logiciel, on peut coder les données sensibles par exemple. Le problème de ces solutions étant qu'elles n'empêchent pas totalement l'intrusion dans un dispositif électronique.

Un système anti-intrusion a pour objectif de détecter toute tentative d'intrusion dans le dispositif électronique à protéger et activer un système d'alerte le cas échéant. Les systèmes anti-intrusion sont utilisés pour protéger des dispositifs électroniques dont on veut conserver la confidentialité.

La présente invention s'adresse au domaine matériel. L'objectif global est la détection d'attaques exercées sur un matériel. Le but étant ensuite de déclencher le cas-échéant des sanctions contre le matériel attaqué (effacement de données, dégradation des performances, pannes, etc.).

Plus particulièrement, on cherche à protéger un matériel au niveau "composant". C'est à dire que l'on souhaite protéger un composant ou plusieurs se situant sur une carte électronique. C'est cette carte électronique qui peut faire l'objet d'une agression et que l'on va chercher à protéger. Ces composants pouvant contenir des informations sensibles type clés de cryptage, algorithmes, etc.

De façon générale, l'intrusion sur un composant se traduit par le positionnement de sondes au niveau de ses sorties électriques pour en extraire son contenu ou surveiller ses entrées/sorties lorsqu'il communique avec un autre composant. L'intrusion peut également se traduire par l'observation par radiographie X du composant.

On cherche donc à créer un système qui permet de détecter toute tentative d'intrusion dans le système à protéger. Le principal problème est de mettre au point un tel système qui permet à la fois : (i) de détecter l'intrusion physique d'un composant de manière efficace et sans ambiguïté, (ii) d'empêcher l'intrusion par rayonnement X du composant, (iii) d'être discret et (iv) d'être difficile à contourner.

Il existe aujourd'hui essentiellement des systèmes de protections contre l'agression qui ont le défaut d'être peu robustes. Ainsi de nombreux produits sensibles (exemple : carte électronique assurant la fonction de calculateur dans une voiture, terminaux de paiement par téléphone mobile) sont protégés, en plus d'un cryptage des données sensibles, contre l'agression par un enrobage des composants sensibles dans une résine spécifique opaque et très dure. Cette résine rend ainsi difficile l'observation directe et l'accès à certains composants et l'action d'enlever cette résine a souvent comme conséquence la détérioration ou la casse du composant visé. Le défaut de cette solution est qu'un outillage adapté (celui dont dispose une équipe effectuant des analyses physiques par exemple) permet de retirer ce type d'enrobage sans action destructive sur la carte. Ainsi il existe des techniques d'usinage par laser ou micro-foreuse ou encore des techniques chimiques (attaques acides) pour enlever progressivement ces couches de protection.

Un autre type de protection utilise une enceinte constituée d'un réseau de fils conducteurs intégré dans une résine. Une intrusion se manifestant par une perforation de l'enceinte est alors détectée par l'apparition d'une rupture au niveau des fils conducteurs. Par exemple, on connaît par la demande de brevet US 20090040735 un système dans lequel le capot est constitué d'un réseau de lignes conductrices prises en sandwich entre deux couches d'un matériau isolant. Si l'on perce ce capot, on court-circuite des lignes, le système peut le détecter et prendre des mesures (effacement de données). Il existe également d'autres solutions qui sont également basés sur un capot dont le perçage induit la coupure de lignes électriques. Ce type de système ne donne pas entière satisfaction par ses performances, notamment parce qu'il ne protège pas d'une intrusion à l'aide de rayons X.

On connaît par la demande de brevet française FR2906062 un système anti-intrusion pour la protection de composants électroniques comportant une enceinte métallique encapsulant une antenne émettrice un micro-commutateur électromécanique capacitif relié à un dispositif d'alerte par une ligne signal, de manière à pouvoir l'activer. Une altération de l'enceinte provoque une modification de l'état du micro-commutateur. Ce système résout le problème de l'intrusion par rayonnement X. Il cependant souhaitable d'avoir un système encore plus sensible pour la détection d'intrusion.

L'invention vise à pallier les problèmes cités précédemment en proposant un système anti-intrusion protégeant du rayonnement X présentant une sensibilité améliorée pour la détection d'intrusion.

A cet effet, l'invention a pour objet un système anti-intrusion pour la protection de composants électroniques comportant un substrat sur la surface duquel sont situés les composants électroniques, un dispositif de détection d'intrusion et une enceinte métallique sous vide encapsulant les composants électroniques et le dispositif de détection d'intrusion, ledit système étant caractérisé en ce que le dispositif de détection d'intrusion comprend :

- des moyens pour l'émission d'un signal hyperfréquence,
- une nano-colonne reliée à une masse et présentant une fréquence de résonnance sensiblement égale à la fréquence du signal hyperfréquence,
- une électrode à laquelle est appliquée un potentiel, ladite électrode étant située en regard d'une extrémité de la nano-colonne et sensiblement sur l'axe longitudinal de la nano-colonne,
- des moyens pour mesurer une variation du potentiel, lesdits moyens étant reliés à un dispositif d'alerte de manière à pouvoir l'activer.

L'invention sera mieux comprise et d'autres avantages apparaîtront à la lecture de la description détaillée faite à titre d'exemple non limitatif et à l'aide des figures parmi lesquelles :

La figure 1 représente un exemple de mise en oeuvre du système de protection selon l'invention.
La figure 2 représente une ligne coplanaire.

La figure 3 représente une ligne micro ruban.
La figure 4 présente les différentes directions du signal émanant d'une ligne micro ruban.

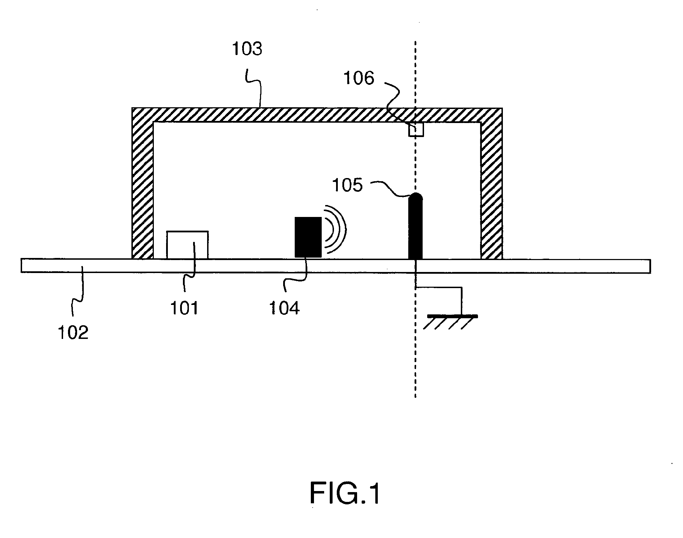

La figure 1 représente un exemple de mise en oeuvre du système anti-intrusion selon l'invention. Le système anti-intrusion pour la protection de composants électroniques 101 comporte un substrat 102 sur la surface duquel sont situés les composants électroniques 101. Le système comprend aussi un dispositif de détection d'intrusion et une enceinte métallique sous vide 103 encapsulant les composants électroniques 101 et le dispositif de détection d'intrusion. Le dispositif de détection d'intrusion comprend :

- des moyens 104 pour l'émission d'un signal (HF) hyperfréquence,
  une nano-colonne 105 reliée à une masse et présentant une fréquence de résonnance sensiblement égale à la fréquence du signal (HF) hyperfréquence,

une électrode 106 à laquelle est appliquée un potentiel (V), ladite électrode étant située en regard d'une extrémité de la nano-colonne et sensiblement sur l'axe longitudinal de la nano-colonne des moyens pour mesurer une variation du potentiel V, lesdits moyens étant reliés à un dispositif d'alerte de manière à pouvoir l'activer.

L'enceinte 103 entièrement conductrice constitue un blindage électromagnétique.

La fréquence de résonnance est sensiblement égale à la fréquence du signal (HF) hyperfréquence. En pratique, Il existe marge de tolérance pour la fréquence du signal hyperfréquence correspondant à une plage de fréquence de plus ou moins 15% autour de la fréquence de résonnance.

En pratique l'électrode 106 se situe en face de l'extrémité de la nano-colonne, c'est-à-dire dans cône dont le sommet est l'extrémité de la nano-colonne et dont l'angle par rapport à l'axe longitudinale de la nano-colonne dépend de la dimension de ladite nano-colonne.

Selon une caractéristique de l'invention les moyens 104 pour l'émission d'un signal hyperfréquence sont disposés de façon à obtenir un champ perpendiculaire à l'axe longitudinal de la nano-colonne. Un champ très faible est suffisant pour faire osciller la nano-colonne.

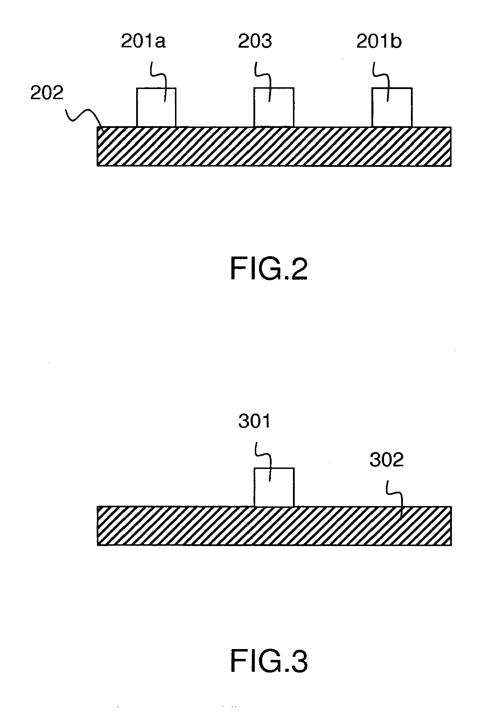

Selon une variante de l'invention, les moyens pour l'émission d'un signal hyperfréquence 104 comprennent une ligne coplanaire. La figure 2 montre un exemple d'une ligne coplanaire. Une ligne coplanaire comprend deux bandes parallèles 201 a, 201 b conductrices reliées à une masse, disposées sur un substrat diélectrique 202 et entre lesquelles est disposée une ligne signal 203.

Selon une autre variante de l'invention, les moyens pour l'émission d'un signal hyperfréquence 104 comprennent une ligne micro ruban. La figure 3 montre un exemple d'une micro ruban. Une ligne micro ruban (micro stream) comprend une ligne signal 301 réalisée dans un matériau très conducteur tel que l'or, disposée sur un substrat diélectrique 302.

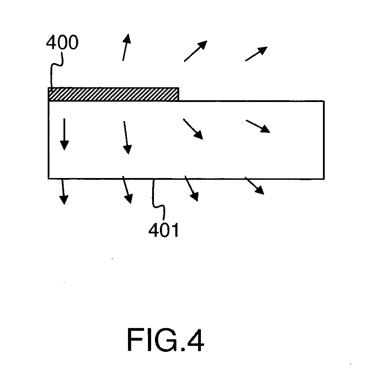

La figure 4 présente les différentes directions du signal émanant d'une ligne micro ruban 400 disposée sur un substrat 401. Les différentes directions prises par le signal sont symbolisées par des flèches.

Selon une variante de l'invention, la nano-colonne 105 est un nanotube de carbone.

Selon une autre variante de l'invention, la nano-colonne 105 est un nanofil métallique.

La variante de l'invention décrite ci-après est relative à l'utilisation d'un nanotube de carbone. Un nanofil présente les mêmes propriétés. La mise oeuvre de l'invention avec un nanofil est donc similaire.

Les nano-colonnes sont des objets conducteurs de taille micrométrique ou nanométrique, présentant un fort rapport entre leur hauteur et leur rayon au sommet, associés à un support conducteur. Les nano colonnes sont de préférence perpendiculaires à ce support conducteur, et doivent leurs propriétés d'émission de champ à l'amplification du champ électrique existant à leur sommet du fait de leur forme. Des exemples sont des micropointes semi-conductrices ou métalliques par exemple de molybdène, de formes approximativement coniques, pointes pyramidales, nanofils métalliques, ou de semi-conducteurs, nanofibres, nanotubes de carbone, de Nitrure de Bore (BN), et autres...

Un nanotube de carbone peut présenter un rapport d'aspect (rapport entre sa longueur et son diamètre) très important par exemple supérieur à 100. Soumis à un champ électrique, il va donc générer un très fort effet de pointe : avec des tensions relativement faibles, on peut générer à son extrémité des champs électriques capables d'arracher les électrons de la matière et de les émettre vers l'extérieur. Ce phénomène est connu sous le nom d'émission de champ. Cette émission est localisée à l'extrémité du nanotube et peut donc servir à envoyer des électrons sur un endroit bien précis. Dans le cas de l'invention, les électrons sont envoyés vers l'électrode 106. Le champ local $E_{local}$ situé au sommet du nanotube 105 est égal au champ appliqué $E_{app}$ au nanotube multiplié par un facteur d'amplification $\beta$ ($E_{local} = E_{app} \cdot \beta$). Le facteur $\beta$ d'amplification est proportionnel au rapport d'aspect du nanotube. Pour l'invention, on utilise par exemple un nanotube 105 dont le rapport d'aspect est de l'ordre de 1000. Typiquement un nanotube de carbone a une longueur micrométrique et un rayon nanométrique. Typiquement les champs appliqués sont de l'ordre de quelques V/$\mu$m à quelques dizaine de V/$\mu$m.

Comme source d'électron, il est ainsi connu d'utiliser des cathodes à pointes qui présentent un facteur d'amplification $\beta$ très important. Le courant émis dépend du champ appliqué $E_0$ selon la loi de Fowler-Nordheim

$$I(E_0) = a(\beta E_0)^2 \exp\left(-\frac{b}{\beta E_0}\right)$$, a et b étant des paramètres qui dépendent notamment du travail de sortie du matériau et de l'aire d'émission. Ce courant augmente de façon exponentielle avec le champ appliqué et le facteur d'amplification. La cathode est maintenue à la masse. Une contre électrode, située à une distance d de la cathode, est porté au potentiel $V_{polarisation}$. Le champ électrique appliqué $E_{appliqué}$ est ainsi égal

à $E_{appliqué} = \dfrac{V_{polarisation}}{d}$. Pour cet émetteur, on peut décrire l'amplification du champ électrique par un tassement des équipotentielles au sommet de la pointe. Le champ électrique $E_{local}$ local au bout de la pointe est alors donné par $E_{local} = \beta_0 E_{appliqué}$, le facteur $\beta_0$ représentant le facteur d'amplification de la pointe et est lié à sa géométrie.

En plaçant, le nanotube de carbone 105 dans une enceinte métallique sous vide 103 et générant dans cette enceinte un signal radio fréquence à une fréquence astucieusement choisie (sensiblement égale à la fréquence de résonance mécanique du nanotube), le nanotube se met à osciller. L'oscillation provoque une modification du rapport d'aspect du nanotube et donc une modification du facteur d'amplification. Ceci a pour effet de moduler le signal, appelé signal de référence, au niveau de l'électrode 106. L'électrode 106 est reliée aux moyens pour mesurer une variation du potentiel V. Les moyens de mesure sont par exemple un comparateur.

Si l'enceinte est percée, on perd le vide et le système ne fonctionne plus car le nanotube est détruit Il n'y a plus de signal au niveau de l'électrode.

Une intrusion, par exemple une altération de l'enceinte métallique 103, conservant le vide modifie la propagation du signal HF. Ceci a pour effet de modifier la vibration du nanotube 105 qui alors ne vibre plus (ou vibre peu). Par conséquent le signal détecté au niveau de l'électrode 106 est différent du signal de référence. Ce nouveau signal s'il est comparé au signal de référence par un dispositif dédié provoque la détection d'agression. Les vibrations mécaniques du nanotube de carbone sont donc utilisées comme détecteur d'intrusion.

Les moyens pour mesurer une variation du potentiel V sont reliés à un dispositif d'alerte de manière à pouvoir l'activer. Le dispositif d'alerte est par exemple un composant logique de type ASIC ou FPGA.

En résumé, en plaçant un nanotube de carbone dans une enceinte sous vide en face d'une contre électrode métallique et en appliquant une différence de potentiel entre le nanotube et cette contre électrode, le nanotube émet des électrons par émission de champ. Il se charge négativement devenant ainsi très sensible aux champs extérieurs. Si le nanotube est soumis à un champ électrique modulé à une fréquence proche de sa fréquence de résonance, il va se mettre à osciller et le courant qu'il émet va lui aussi être modulé. Si l'enceinte est percée, on perd le vide et ce système ne fonctionne plus (destruction du nanotube). Si le composant est tout de même maintenu dans une atmosphère sous vide, le signal HF est perturbé et l'on a modification du signal reçu par le nanotube ce qui se traduit par une variation du signal mesuré par rapport au signal de référence. Dans tous les cas, l'intrusion est détectée.

## Revendications

1. Système anti-intrusion pour la protection de composants électroniques (101) comportant un substrat (102) sur la surface duquel sont situés les composants électroniques (101), un dispositif de détection d'intrusion et une enceinte métallique sous vide (103) encapsulant les composants électroniques (101) et le dispositif de détection d'intrusion, ledit système étant **caractérisé en ce que** le dispositif de détection d'intrusion comprend :

   - des moyens (104) pour l'émission d'un signal (HF) hyperfréquence,
   - une nano-colonne (105) reliée à une masse et présentant une fréquence de résonnance sensiblement égale à la fréquence du signal (HF) hyperfréquence,
   - une électrode (106) à laquelle est appliquée un potentiel (V), ladite électrode étant située en regard d'une extrémité de la nano-colonne et sensiblement sur l'axe longitudinal de la nano-colonne,
   - des moyens pour mesurer une variation du potentiel (V), lesdits moyens étant reliés à un dispositif d'alerte de manière à pouvoir l'activer.

2. Dispositif anti-intrusion selon la revendication 1, **caractérisé en ce que** les moyens (104) pour l'émission d'un signal hyperfréquence sont disposés de façon à obtenir un champ perpendiculaire à l'axe longitudinale de la nano-colonne.

3. Dispositif anti-intrusion selon l'une des revendications 1 ou 2, **caractérisé en ce que** les moyens pour l'émission d'un signal hyperfréquence (104) comprennent une ligne coplanaire.

4. Dispositif anti-intrusion selon l'une des revendications 1 ou 2, **caractérisé en ce que** les moyens pour l'émission d'un signal hyperfréquence (104) comprennent une ligne micro ruban.

5. Dispositif anti-intrusion selon l'une des revendications précédentes, **caractérisé en ce que** la nano-colonne (105) est un nanotube de carbone.

6. Dispositif anti-intrusion selon l'une des revendications 1 à 4, **caractérisé en ce que** la nano-colonne (105) est un nanofil métallique.

## Patentansprüche

1. Einbruchssicherungssystem zum Schützen von elektronischen Komponenten (101), umfassend ein Substrat (102), auf dessen Oberfläche sich die elektronischen Komponenten (101) befinden, eine Einbruchserkennungsvorrichtung und ein metallisches Vakuumgehäuse (103), in dem die elektronischen Komponenten (101) und die Einbruchserkennungsvorrichtung verkapselt sind, wobei das System **dadurch gekennzeichnet ist, dass** die Einbruchserkennungsvorrichtung Folgendes umfasst:

   - Mittel (104) zum Aussenden eines Höchstfrequenzsignals (HF);
   - eine Nanosäule (105), die mit Masse verbunden ist und eine Resonanzfrequenz hat, die im Wesentlichen gleich der Frequenz des Höchstfrequenzsignals (HF) ist;
   - eine Elektrode (106), an die ein Potential (V) angelegt wird, wobei die Elektrode so positioniert ist, dass sie sich gegenüber einem Ende der Nanosäule und im Wesentlichen auf der Längsachse der Nanosäule befindet;
   - Mittel zum Messen einer Variation des Potentials (V), wobei die Mittel so mit einer Warnvorrichtung verbunden ist, dass sie die Vorrichtung aktivieren können.

2. Einbruchssicherungsvorrichtung nach Anspruch 1, **dadurch gekennzeichnet, dass** die Mittel (104) zum Aussenden eines Höchstfrequenzsignals so angeordnet sind, dass ein Feld lotrecht zur Längsachse der Nanosäule erhalten wird.

3. Einbruchssicherungsvorrichtung nach Anspruch 1 oder 2, **dadurch gekennzeichnet, dass** die Mittel (104) zum Aussenden eines Höchstfrequenzsignals eine koplanare Leitung umfassen.

4. Einbruchssicherungsvorrichtung nach Anspruch 1 oder 2, **dadurch gekennzeichnet, dass** die Mittel (104) zum Aussenden eines Höchstfrequenzsignals einen Mikrostreifenleiter umfassen.

5. Einbruchssicherungsvorrichtung nach einem der vorherigen Ansprüche, **dadurch gekennzeichnet, dass** die Nanosäule (105) ein Kohlenstoffnanoröhrchen ist.

6. Einbruchssicherungsvorrichtung nach einem der Ansprüche 1 bis 4, **dadurch gekennzeichnet, dass** die Nanosäule (105) ein metallischer Nanodraht ist.

## Claims

1. An anti-intrusion system for protecting electronic components (101), comprising a substrate (102), with said electronic components (101) being located on the surface of said substrate, an intrusion detection device and a metal vacuum enclosure (103) encapsulating said electronic components (101) and said intrusion detection device, said system being **characterised in that** said intrusion detection device comprises:

- means (104) for transmitting a hyperfrequency signal (HF);
- a nanocolumn (105) connected to ground and having a resonant frequency substantially equal to the frequency of said hyperfrequency signal (HF);
- an electrode (106), to which a potential (V) is applied, said electrode being located facing one end of said nanocolumn and substantially on the longitudinal axis of said nanocolumn;
- means for measuring a variation of said potential (V), said means being connected to a warning device so as to be able to activate said device.

2. The anti-intrusion device according to claim 1, **characterised in that** said means (104) for transmitting a hyperfrequency signal are disposed so as to obtain a field perpendicular to the longitudinal axis of said nanocolumn.

3. The anti-intrusion device according to claim 1 or 2, **characterised in that** said means (104) for transmitting a hyperfrequency signal comprise a coplanar line.

4. The anti-intrusion device according to claim 1 or 2, **characterised in that** said means (104) for transmitting a hyperfrequency signal comprise a microstrip line.

5. The anti-intrusion device according to any one of the preceding claims, **characterised in that** said nanocolumn (105) is a carbon nanotube.

6. The anti-intrusion device according to any one of claims 1 to 4, **characterised in that** said nanocolumn (105) is a metal nanowire.

FIG.1

201a    203    201b

202

**FIG.2**

301

302

**FIG.3**

FIG.4

**RÉFÉRENCES CITÉES DANS LA DESCRIPTION**

**Documents brevets cités dans la description**

- US 20090040735 A
- FR 2906062